# EUROPÄISCHE PATENTANMELDUNG

(11) **EP 4 574 466 A1**
(43) Veröffentlichungstag der Anmeldung: **25.06.2025**
(21) Anmeldenummer: 24214670.2
(22) Anmeldetag: 22.11.2024
(51) Int. Cl.: B60C 11/24, G01C 21/34, G01M 17/02

(54) **VERFAHREN ZUR ERMITTLUNG EINES REIFENABRIEBS EINES FAHRZEUGS**

(30) Priorität: 22.12.2023 DE 102023136581
(71) Anmelder: Continental Reifen Deutschland GmbH, 30175 Hannover (DE)
(72) Erfinder: Dr. Kiani, Amin, 30175 Hannover (DE); Trujillo Martinez, Mauricio, 30175 Hannover (DE); Gläser, Frank, 30175 Hannover (DE)
(74) Vertreter: Continental Corporation

(57) **Zusammenfassung**

Verfahren zur Ermittlung eines Reifenabriebs eines Fahrzeugs, aufweisend
- Erstellen einer Anzahl von Referenzrouten, die charakterisiert sind zumindest durch einen Straßenverlauf in drei Dimensionen;
- Simulieren von Fahrten eines Fahrzeugs entlang der Referenzrouten und Generieren von Datensätzen enthaltend fahrdynamische Daten, Routeninformationen sowie Daten zum damit verbundenen Reifenabrieb;
- Teilen der Referenzrouten in zufällig ausgewählte Teilrouten;
- extrahieren fahrdynamischer Daten und/oder Routeninformationen für jede Teilroute aus den Datensätzen der Simulation;
- verwenden der extrahierten fahrdynamischen Daten der Teilrouten zum Training eines selbstlernenden Algorithmus.

## Beschreibung

Die vorliegende Erfindung betrifft ein Verfahren zur Ermittlung eines Reifenabriebs eines Fahrzeugs, insbesondere ein modellgestütztes Verfahren.

Fahrzeugreifen haben ein Profil, das aus Sicherheitsgründen eine bestimmte Mindestprofiltiefe aufweisen sollte. In der Regel kann das Profil manuell vermessen werden und bei Bedarf ein Reifenwechsel durchgeführt werden. Insbesondere bei Fahrzeugen, die von einer Vielzahl von Personen gefahren werden (beispielsweise Car-Sharing, Mietfahrzeuge etc.) oder im Falle großer Fahrzeugflotten ist eine derartige manuelle Überprüfung jedoch sehr aufwendig und wird oftmals nicht oder unzureichend vorgenommen.

Es gibt verschiedene Ansätze, den Reifenabrieb automatisiert zu überwachen und/oder zu modellieren. Dazu werden teilweise telemetrische Daten verwendet, die von Fahrzeugen aufgenommen werden. Diese Daten enthalten jedoch normalerweise keine oder kaum Informationen zur Profiltiefe. Somit stehen meist keine geeigneten Trainingsdaten für Algorithmen des maschinellen Lernens zur Verfügung.

Es ist daher eine Aufgabe der vorliegenden Erfindung, ein Verfahren zur Ermittlung eines Reifenabriebs eines Fahrzeugs anzugeben, das automatisiert ausführbar ist und eine aktuelle Profiltiefe mit hoher Genauigkeit liefert.

Diese Aufgabe wird gelöst durch den Gegenstand des unabhängigen Patentanspruchs. Vorteilhafte Ausführungsformen und Weiterbildungen sind Gegenstand der abhängigen Ansprüche.

Gemäß einem Aspekt der Erfindung wird ein Verfahren zur Ermittlung eines Reifenabriebs eines Fahrzeugs angegeben, aufweisend das Erstellen einer Anzahl von Referenzrouten, die charakterisiert sind zumindest durch einen Straßenverlauf in drei Dimensionen. Anschließend werden Fahrten eines Fahrzeugs entlang der Referenzrouten simuliert. Dabei werden Datensätze generiert enthaltend fahrdynamische Daten, Routeninformationen sowie Daten zum damit verbundenen Reifenabrieb. Die fahrdynamischen Daten enthalten insbesondere Daten zur Geschwindigkeit und zur Beschleunigung. Die Routeninformationen enthalten insbesondere den Straßenverlauf in drei Dimensionen, beispielsweise in Form von GPS-Koordinaten, und/oder Informationen zu Stoppzeichen, Abbiegevorgängen auf der Strecke, Straßentyp, Höhenmetern, Geschwindigkeitsbegrenzungen etc.

Die Referenzrouten werden anschließend in zufällig ausgewählte Teilrouten geteilt und für jede Teilroute werden fahrdynamische Daten und/oder Routeninformationen aus den Datensätzen der Simulation extrahiert. Die extrahierten fahrdynamischen Daten der Teilrouten werden zum Training eines selbstlernenden Algorithmus verwendet.

Unter einem Teilen der Referenzrouten in zufällig ausgewählte Teilrouten wird verstanden, dass die Referenzrouten in eine Vielzahl von Teilrouten geteilt werden, deren Anfang und Ende bzw. Längen zufällig ausgewählt sind. Dabei können auch einander überlappende Teilrouten erstellt werden, so dass eine sehr hohe Zahl von Teilrouten zur Verfügung gestellt werden kann. Die zufällige Teilung hat den Vorteil, dass sie einen Bias in den Trainingsdaten für den selbstlernenden Algorithmus verhindert.

Die fahrdynamischen Daten und/oder die Routeninformationen für jede Teilroute werden insbesondere beim Extrahieren aus den Daten der Simulation aggregiert. Dies erfolgt vorteilhafterweise in der Weise, in der später bei der Anwendung des Modells Daten zur Verfügung stehen. Beispielsweise können die Daten in minütlichen Abschnitten aggregiert werden, wenn bei der Anwendung minütlich Daten aus dem Fahrzeug zur Verfügung stehen. Stehen Daten mit höherer Frequenz zur Verfügung, erfolgt auch die Aggregierung für kürzere Zeitabschnitte. Die Aggregierung hat den Vorteil, dass das zu handhabende und zu übertragende Datenvolumen erheblich reduziert werden kann.

Im Ergebnis stehen für jede Teilroute Datensätze zur Verfügung, die aggregierte Werte wie Mittelwerte, Maximal- und Minimalwerte, Medianwerte, Varianzen oder weitere statistische Informationen der fahrdynamischen Daten und/oder der Routeninformationen enthalten.

Das Verfahren hat den Vorteil, dass der Simulationsaufwand, der viel Rechenleistung erfordert, begrenzt ist. Es werden lediglich die Referenzrouten simuliert, für diese liefert die Simulation jedoch Daten in sehr guter Qualität. Durch die Teilung in eine Vielzahl von Teilrouten ist es für den selbstlernenden Algorithmus möglich, die Wirkungen von bestimmten Fahrmanövern auf den Reifenabrieb auf einer Route zu lernen. Beispielsweise kann der Effekt bestimmter Kurvenfahrten gelernt werden, d.h. der Zusammenhang zwischen den fahrdynamischen Daten der Kurvenfahrt und dem damit verbundenen Reifenabrieb, oder der Effekt von Bremsmanövern. Somit steht eine Vielzahl von Trainingsdaten für den selbstlernenden Algorithmus zur Verfügung, obwohl der Simulationsaufwand auf die Referenzrouten begrenzt ist.

Da der Algorithmus die Wirkung typischer Manöver lernen kann, ist es nicht notwendig, die ganze Lebensdauer eines Reifens zu simulieren. Separate Simulationen für die Teilrouten sind nicht erforderlich, da sie den Simulationsdaten für die Referenzrouten entnommen werden können.

Das Verfahren hat ferner den Vorteil, dass es ein sehr gutes Verständnis der Faktoren, die den Reifenabrieb beeinflussen, insbesondere das Fahrverhalten betreffend, vermitteln kann. Dies kann auch Flottenmanagern dabei helfen, den geeigneten Reifentyp für eine geplante Anwendung auszuwählen und Reifenwechsel zu planen.

Gemäß einer Ausführungsform umfasst das Verfahren ferner das Ermitteln fahrdynamischer Daten mittels zumindest einer telemetrischen Einrichtung während Fahrten des Fahrzeugs entlang von Fahrstrecken, das Teilen der Fahrstrecken in zufällig ausgewählte Teilstrecken sowie das Extrahieren fahrdynamischer Daten für jede Teilstrecke aus den telemetrischen Daten. Diese werden anschließend verwendet zur Ermittlung eines Reifenabriebs auf der betreffenden Fahrstrecke mithilfe des selbstlernenden Algorithmus.

Dabei überlappen sich die Teilstrecken nicht und weisen keine Lücken auf. Vielmehr ergibt ihre Summe jeweils die vollständige Fahrstrecke, für die der Reifenabrieb ermittelt wird.

Alternativ oder zusätzlich zu den fahrdynamischen Daten, die durch die zumindest eine telemetrische Einrichtung bereitgestellt werden, können während Fahrten des Fahrzeugs entlang von Fahrstrecken auch Daten betreffend die Position des Fahrzeugs, den Straßentyp, die Anzahl von Fahrmanövern, die Anzahl von Stoppzeichen und/oder die gefahrenen Höhenmeter ermittelt werden. Auch in diesem Fall werden die Fahrstrecken in zufällig ausgewählte Teilstrecken geteilt und es werden die Daten betreffend die Position des Fahrzeugs, den Straßentyp, die Anzahl von Fahrmanövern, die Anzahl von Stoppzeichen und/oder die Höhenmeter und/oder weitere Routeninformationen für jede Teilstrecke extrahiert. Sie werden anschließend zur Ermittlung eines Reifenabriebs mithilfe des selbstlernenden Algorithmus verwendet.

Diese Ausführungsform hat den Vorteil, dass sie nicht auf zeitlich hochaufgelöste telemetrische Daten angewiesen ist. Das Senden telemetrischer Daten mit hoher Frequenz, d.h. beispielsweise ein Messwert pro Sekunde, generiert verhältnismäßig viel Datenverkehr, der in manchen Betriebszuständen des Fahrzeugs nicht möglich ist oder vermieden werden soll. Steht zeitweise beispielsweise nur ein Datenpunkt pro Minute zur Verfügung, können Geschwindigkeit und Beschleunigung nicht aussagekräftig verwendet werden. Die Position des Fahrzeugs jedoch oder die Anzahl von Manövern (z.B. Kurvenfahrt, Abbiegen, Wenden, Stoppen) können auch bei einer geringeren Anzahl von Datenpunkten aussagekräftig sein. Typischerweise liefert ihre Verwendung anstelle von fahrdynamischen Daten eine etwas weniger genaue Ermittlung des Reifenabriebs, die jedoch für viele Anwendungsfälle ausreichend sein kann. Gemäß einer Ausführungsform enthalten die fahrdynamischen Daten die Geschwindigkeit und die Beschleunigung des Fahrzeugs. Dabei können die Geschwindigkeit und die Beschleunigung des Fahrzeugs insbesondere auf aggregierter Ebene verwendet werden.

Dadurch wird die Komplexität des Machine learning-Modells zur Vorhersage des Reifenabriebs reduziert. Zudem ist es dadurch möglich, die Profiltiefe auch von fehlerbehafteten fahrdynamischen Daten, die von telemetrischen Einheiten gesammelt wurden, mit hoher Genauigkeit abzuleiten.

Gemäß einer Ausführungsform enthalten die generierten Datensätze neben den fahrdynamischen Daten und den Daten zum damit verbundenen Reifenabrieb auch Informationen zum Anteil von Straßen bestimmter Straßentypen.

Insbesondere können Informationen darüber enthalten sein, ob eine Straße in eine bestimmte Kategorie fällt (innerorts, Landstraße, Autobahn etc.). Alternativ oder zusätzlich können Informationen zum Straßenbelag und/oder zur zulässigen Geschwindigkeit oder Durchschnittsgeschwindigkeit enthalten sein. Auch die Informationen zum Anteil von Straßen bestimmter Straßentypen werden zum Training des selbstlernenden Algorithmus verwendet.

Gemäß einer Ausführungsform wird der selbstlernende Algorithmus verwendet zur Ermittlung und Vorhersage von Reifenabrieb bzw. Profiltiefen eines Fahrzeugs. Dies kann in einem onboard-Service im Fahrzeug erfolgen oder auf einer Recheneinheit außerhalb des Fahrzeugs, der die telemetrischen Fahrzeugdaten zur Verfügung stehen, beispielsweise bei einem Flottenmanagement.

Gemäß einer Ausführungsform wird der selbstlernende Algorithmus verwendet zur Berechnung des Reifenabriebs für einzelne Reifen eines Fahrzeugs. Wenn die Simulation reifenspezifisch durchgeführt wird, kann auch die Ermittlung des Reifenabriebs reifenspezifisch erfolgen.

Gemäß einem Aspekt der Erfindung wird ein Computerprogrammprodukt angegeben, umfassend Befehle, die bei der Ausführung des Programms durch einen Computer diesen veranlassen, das beschriebene Verfahren durchzuführen. Dabei kann es sich insbesondere, zumindest in Teilen, auch um eine Web- bzw. Cloudanwendung handeln.

Gemäß einem weiteren Aspekt der Erfindung wird ein computerlesbares Medium angegeben, umfassend Befehle, die bei der Ausführung durch einen Computer diesen veranlassen, das beschriebene Verfahren durchzuführen.

Ausführungsformen der Erfindung werden im Folgenden anhand schematischer Zeichnungen beispielhaft beschrieben.
- Figur 1: zeigt Schritte eines Verfahrens gemäß einer Ausführungsform der Erfindung und
- Figur 2: zeigt eine Veranschaulichung der verwendeten Datensätze in dem Verfahren gemäß Figur 1.

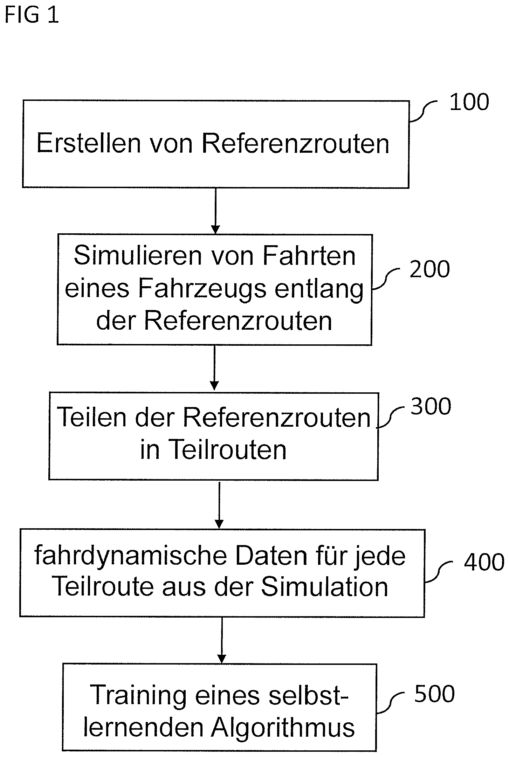

Figur 1 zeigt den Ablauf eines Verfahrens gemäß einer Ausführungsform der Erfindung. In einem Schritt 100 wird eine Anzahl von Referenzrouten erstellt. Diese sind insbesondere charakterisiert durch einen Straßenverlauf in drei Dimensionen, enthalten also insbesondere Informationen zu Kurvenfahrten und Höhenmetern, jedoch gegebenenfalls auch Daten zur Art der Straßen.

In einem Schritt 200 erfolgt das Simulieren von Fahrten eines Fahrzeugs entlang der Referenzrouten. In der Simulation werden die auf die Reifen wirkenden Kräfte auf die Reifenaufstandsfläche berechnet, die für den Reifenabrieb verantwortlich sind. Diese werden im Fahrzeug nicht gemessen und stehen somit nicht als Messdaten zur Verfügung. Es können jedoch die fahrdynamischen Daten Geschwindigkeit und Beschleunigung, die die Kräfte auf die Reifenaufstandsfläche verursachen und die ebenfalls simuliert werden, während einer späteren Fahrt gemessen werden. Im Schritt 200 werden somit Datensätze generiert, die fahrdynamische Daten und/oder Routeninformationen sowie Daten zum damit verbundenen Reifenabrieb enthalten.

Die Referenzrouten werden anschließend im Schritt 300 in zufällig ausgewählte Teilrouten geteilt, die sich auch überlappen und gegenseitig enthalten können. Auf diese Weise wird die Datenbasis für ein Machine learning-Modell vergrößert, ohne dass der Simulationsaufwand vergrößert wird. Zudem kann die Wirkung einzelner Manöver durch die kürzeren Teilrouten klarer erkannt werden.

Im Schritt 400 werden fahrdynamische Daten und/oder Routeninformationen für jede Teilroute aus den Datensätzen der Simulation extrahiert. Im Ergebnis können die sich daraus ergebenden Datensätze drei verschiedene Typen von Informationen enthalten, nämlich Informationen zur Straße (insbesondere Anteil von Straßen unterschiedlicher Kategorien an der Teilroute, Zahl und Art von Manövern, Höhenmeter), die Geschwindigkeit und die Beschleunigung.

Im Schritt 500 werden diese extrahierten fahrdynamischen Daten der Teilrouten zum Training eines selbstlernenden Algorithmus verwendet.

Es steht somit ein Machine learning-Modell zur Verfügung, das an Daten hoher Qualität trainiert wurde, wobei die Daten mit vergleichsweise geringem Simulationsaufwand gewonnen wurden.

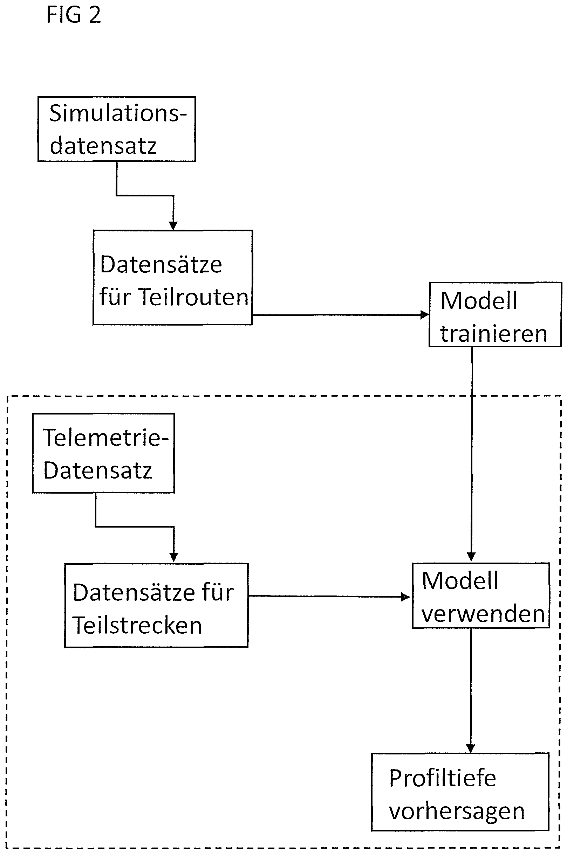

Figur 2 zeigt die Anwendung mit dem derart trainierten Modell. Zunächst wird die Simulation der Referenzrouten durchgeführt und liefert Simulationsdatensätze, die fahrdynamische Daten, Routeninformationen sowie Daten zum damit verbundenen Reifenabrieb enthalten.

Daraus werden Datensätze für zufällig ausgewählte Teilrouten erstellt. Diese werden verwendet, um den selbstlernenden Algorithmus, d.h. das Modell, zu trainieren. Das Modell steht dann anschließend zur Verfügung, um die Profiltiefe für Reifen eines Fahrzeugs zu ermitteln.

Dazu werden während der Fahrten mit dem Fahrzeug telemetrische Daten gewonnen, die insbesondere Informationen zur Geschwindigkeit und zur Beschleunigung des Fahrzeugs enthalten. Auch diese Fahrten werden zufällig in Teilstrecken geteilt, die sich nicht überlappen, so dass Datensätze der telemetrischen Daten für die Teilstrecken zur Verfügung stehen. Alternativ oder zusätzlich können Routeninformationen für jede Teilstrecke zur Verfügung stehen.

Das zuvor trainierte Modell erhält diese Datensätze der telemetrischen Daten für die Teilstrecken als Input für die Vorhersage der Profiltiefe.

Auf diese Weise lassen sich auch Profiltiefen nach sehr langen Strecken vorhersagen, die durch die simulierten Referenzrouten nicht abgebildet werden. Insbesondere der gestrichelt umrahmte Teil des in Figur 2 gezeigten Ablaufs kann im Fahrzeug selbst erfolgen, wobei das trainierte Modell für eine Vielzahl von Fahrzeugen beispielsweise als Cloudanwendung zur Verfügung gestellt werden kann. Alternativ kann auch der gestrichelt umrahmte Teil des Verfahrens außerhalb des Fahrzeugs durchgeführt werden.

### Bezugszeichenliste

- 100: Schritt
- 200: Schritt
- 300: Schritt
- 400: Schritt
- 500: Schritt

## Patentansprüche

1. Verfahren zur Ermittlung eines Reifenabriebs eines Fahrzeugs, aufweisend
- Erstellen einer Anzahl von Referenzrouten, die charakterisiert sind zumindest durch einen Straßenverlauf in drei Dimensionen;
- Simulieren von Fahrten eines Fahrzeugs entlang der Referenzrouten und Generieren von Datensätzen enthaltend fahrdynamische Daten, Routeninformationen sowie Daten zum damit verbundenen Reifenabrieb;
- Teilen der Referenzrouten in zufällig ausgewählte Teilrouten;
- extrahieren fahrdynamischer Daten und/oder Routeninformationen für jede Teilroute aus den Datensätzen der Simulation;
- verwenden der extrahierten fahrdynamischen Daten der Teilrouten zum Training eines selbstlernenden Algorithmus.

2. Verfahren nach Anspruch 1, aufweisend ferner
- Ermitteln fahrdynamischer Daten mittels zumindest einer telemetrischen Einrichtung während Fahrten des Fahrzeugs entlang von Fahrstrecken;
- Teilen der Fahrstrecken in zufällig ausgewählte Teilstrecken;
- Extrahieren fahrdynamischer Daten für jede Teilstrecke aus den telemetrischen Daten;
- verwenden der extrahierten fahrdynamischen Daten zur Ermittlung eines Reifenabriebs.

3. Verfahren nach Anspruch 1 oder 2, aufweisend ferner
- Ermitteln von Daten betreffend die Position des Fahrzeugs, den Straßentyp, die Anzahl von Fahrmanövern, die Anzahl von Stoppzeichen und/oder die Höhenmeter während Fahrten des Fahrzeugs entlang von Fahrstrecken;
- Teilen der Fahrstrecken in zufällig ausgewählte Teilstrecken;
- Extrahieren von Daten betreffend die Position des Fahrzeugs, den Straßentyp, die Anzahl von Fahrmanövern, die Anzahl von Stoppzeichen und/oder die Höhenmeter für jede Teilstrecke;
- verwenden der extrahierten Daten zur Ermittlung eines Reifenabriebs.

4. Verfahren nach einem der Ansprüche 1 bis 3,
wobei die fahrdynamischen Daten die Geschwindigkeit und die Beschleunigung des Fahrzeugs enthalten.

5. Verfahren nach Anspruch 4,
wobei die Geschwindigkeit und die Beschleunigung des Fahrzeugs auf aggregierter Ebene verwendet werden.

6. Verfahren nach einem der Ansprüche 1 bis 5,
wobei die generierten Datensätze neben den fahrdynamischen Daten und den Daten zum damit verbundenen Reifenabrieb auch Informationen zum Anteil von Straßen bestimmter Straßentypen enthalten.

7. Verfahren gemäß einem der Ansprüche 1 bis 6, wobei der selbstlernende Algorithmus verwendet wird zur Ermittlung des Reifenabriebs für einzelne Reifen eines Fahrzeugs.

8. Computerprogrammprodukt, umfassend Befehle, die bei der Ausführung des Programms durch einen Computer diesen veranlassen, das Verfahren gemäß einem der Ansprüche 1 bis 7 durchzuführen.

9. Computerlesbares Medium, umfassend Befehle, die bei der Ausführung durch einen Computer diesen veranlassen, das Verfahren gemäß einem der Ansprüche 1 bis 7 durchzuführen.
